# EUROPÄISCHE PATENTSCHRIFT

(11) **EP 2 268 725 B1**
(45) Veröffentlichungstag und Bekanntmachung des Hinweises auf die Patenterteilung: **29.06.2011**
(21) Anmeldenummer: 09734171.3
(22) Anmeldetag: 26.03.2009
(51) Int. Cl.: C08K 3/00, C09C 1/00

(54) **PARTIKULÄRE WACHSKOMPOSITE UND VERFAHREN ZU DEREN HERSTELLUNG SOWIE DEREN VERWENDUNG**
PARTICULATE WAX COMPOSITES AND METHOD FOR THE PRODUCTION THEREOF AND THE USE THEREOF
COMPOSITE DE CIRE PARTICULAIRE, PROCÉDÉ DE PRODUCTION ET UTILISATION DE CE COMPOSITE

(30) Priorität: 25.04.2008 DE 102008021006
(43) Veröffentlichungstag der Anmeldung: 05.01.2011
(73) Patentinhaber: BYK-Chemie GmbH, 46483 Wesel (DE)
(72) Erfinder: NOLTE, Ulrich, 47533 Kleve (DE); BERKEI, Michael, 45721 Haltern am See (DE); SAWITOWSKI, Thomas, 46485 Wesel (DE)
(74) Vertreter: Strehlke, Ingo Kurt
(86) Internationale Anmeldenummer: PCT/EP2009/002217
(87) Internationale Veröffentlichungsnummer: WO 2009/129908

(56) Entgegenhaltungen:
- EP-A- 1 477 457
- WO-A-01/09231
- WO-A-95/31508
- WO-A-2007/095292
- WO-A-2007/146390
- WO-A-2008/079760
- DE-A1-102006 025 848
- US-A1- 2005 196 605

## Beschreibung

Die vorliegende Erfindung betrifft partikuläre wachshaltige Kompositmaterialien ("Wachskomposite" bzw. "Wachsnanokomposite"), insbesondere in Form anorganisch-organischer Hybridkompositmaterialien, und ein Verfahren zu deren Herstellung sowie deren Verwendung.

Insbesondere betrifft die vorliegende Erfindung anorganisch-organische Kompositpartikel, insbesondere Komposit-Nanopartikel, wobei die Kompositpartikel mindestens ein organisch-basiertes Material, welches mindestens ein Wachs enthält oder hieraus besteht, und ein anorganisch-basiertes Material umfassen, und ein Verfahren zu deren Herstellung sowie deren Verwendung.

Weiterhin betrifft die vorliegende Erfindung die Verwendung dieser Kompositpartikel, insbesondere in Beschichtungsstoffen und Beschichtungssystemen, wie insbesondere Lacken, Farben und dergleichen, in Dispersionen aller Art, in Kunststoffen, in Schaumstoffen, in Kosmetika, insbesondere Nagellacken, in Klebstoffen, in Dichtungsmassen etc.

Des weiteren betrifft die vorliegende Erfindung die Verwendung dieser Kompositpartikel als Füllstoffe bzw. Inhaltsstoffe, insbesondere in den vorgenannten Systemen.

Schließlich betrifft die vorliegende Erfindung gleichermaßen Systeme, insbesondere Beschichtungsstoffe und Beschichtungssysteme, wie insbesondere Lacke, Farben und dergleichen, Kunststoffe, Schaumstoffe und Kosmetika, wie insbesondere Nagellacke, welche diese Kompositpartikel enthalten.

Außerdem sind Gegenstand der vorliegenden Erfindung auch neuartige Dispersionen, welche diese Kompositpartikel in einem Träger- oder Dispergiermedium enthalten.

Zur Verbesserung der mechanischen Eigenschaften von Beschichtungs- und Dispersionssystemen (so z. B. von Lacken, Farben wie Druckfarben, Beschichtungen) und von Kunststoffen, insbesondere speziell zur Steigerung deren Verschleißeigenschaften, wie Kratzfestigkeit und Abriebfestigkeit, ist die Inkorporierung von Additiven und Füllstoffen, wie beispielsweise von Wachsen oder anorganischen Füllstoffpartikeln (z. B. von sogenannten Nanopartikeln) dem Fachmann grundsätzlich bekannt.

Die aus dem Stand der Technik bekannten anorganischen Füllstoffpartikel verbessern zwar unter Umständen die Kratzfestigkeit der Beschichtungssysteme (z. B. von Lacken), in denen sie eingesetzt werden; jedoch kann es nach dem Auftrag zu einer erhöhten Sprödigkeit des resultierenden Beschichtungsfilms (z. B. eines Lackfilms) kommen. Auch führt die Inkorporierung dieser Füllstoffpartikel oftmals zu einer unerwünschten Eintrübung und mangelnden Transparenz des Beschichtungssystems. Auch sind häufig relativ hohe Füllstoffgehalte erforderlich, um die gewünschten Effekte zu erreichen, was eine Stabilisierung der resultierenden Dispersionssysteme erschwert und auch aus Kostengründen unerwünscht ist.

Die WO 2007/072189 A2 betrifft eine silylierte Polymeremulsion, welche außerdem Nanosilikat enthält, und ihre Verwendung für Beschichtungssysteme. Mit den dort beschriebenen Emulsionen lassen sich jedoch nicht immer die gewünschten Anwendungseigenschaften erzielen.

Die EP 0 960 871 A2 betrifft wäßrige Zubereitungen zur Behandlung mineralischer Baustoffe, wobei die wäßrigen Zubereitungen neben einer Emulsion eines polyfunktionellen Carbosilans bzw. dessen Kondensationsproduktes, einer Emulsion eines Organopolysiloxans und einem wasserdispergierbaren oder wasseremulgierbaren organischen Polymer zusätzlich anorganische Nanopartikel enthält.

Die JP 07138484 A betrifft die Herstellung von Extrudaten aus einem Gemisch aus Wachs, Ölen oder Harzen und einem pulverförmigen anorganischen Material, wie z. B. Talkum oder Silika. Die inkorporierten zusätzlichen Komponenten sollen bei dem Extrusionsvorgang mit dem Wachs unter anderem eine verbesserte Fließfähigkeit bewirken.

Die JP 06166756 A betrifft Emulsionen feinteiliger Wachspartikel mit Teilchendurchmessern von 0,1 bis 100 µm in einer inerten Flüssigkeit, vorzugsweise einem Fluorkohlenwasserstoff, wie Perfluorpentan, unter Verwendung von hydrophobem Silika als Emulgator in Mengen von 1 bis 20 Gewichtsteilen, bezogen auf 100 Gewichtsteile Wachs. Das hydrophobierte Silika, welches lediglich als Emulgator zum Einsatz kommt, wird durch Reaktion der Oberfläche von hydrophilem Silika mit einem Hydrophobierungsmittel, insbesondere halogeniertem Alkylsilan oder Alkoxysilan, erhalten.

Die JP 2004-339515 A betrifft die Herstellung von gefälltem Silika mit oberflächenmodifizierten Eigenschaften, wobei das auf diese Weise hergestellte Silika als Mattierungsmittel in Lacken eingesetzt werden soll. Die Oberflächenmodifizierung erfolgt durch Behandlung der Silikaoberfläche mit einem Polyethylenwachs, so daß wachsbeschichtete Silikapartikel resultieren.

Die KR 10-2004-0098585 A betrifft gefälltes Silika, dessen Oberfläche mit einem Polyorganosiloxanpolymer beschichtet ist, sowie ein Verfahren zu dessen Herstellung. Das oberflächenmodifizierte Silika soll als Mattierungsmittel für transparente Beschichtungsmaterialien Verwendung finden.

Weiterhin betrifft die KR 10-2005-0094496 A ein Herstellungsverfahren für einen Kern/Hülle-Polymerlatex, um den Ankopplungsgrad zwischen Wachspartikeln und Latexpartikeln zu verbessern und auf diese Weise den Herstellungsprozeß zu vereinfachen, indem vorangehend keine Wachsemulsion hergestellt werden zu braucht. Die auf diese Weise hergestellten Zubereitungen sollen als Tonerzusammensetzungen für elektrophotographische Bildgeräte, insbesondere Kopiergeräte, dienen.

Die WO 95/31508 A1 betrifft wachsbeschichtete Silikapartikel, welche als Mattierungsmittel Verwendung finden sollen.

Weiterhin betrifft die EP 1 182 233 B 1 ein Verfahren zur Belegung von Kieselsäuren mit Wachsen, wobei die dort beschriebenen Kieselsäuren als Mattierungsmittel in Lacken Verwendung finden sollen.

Die EP 1 204 701 B 1 betrifft eine gehärtete Beschichtung auf einem Substrat mit einem Konzentrationsgradienten der in der Beschichtung enthaltenen Füllstoffteilchen dahingehend, daß innerhalb oberflächennaher Regionen der Beschichtung die Konzentration der inkorporierten Füllstoffteilchen größer ist als die Konzentration dieser Teilchen innerhalb der darunterliegenden Beschichtungsbereiche. Hierdurch wird aber infolge Inhomogenität der Beschichtung eine nur bereichsweise Verbesserung ausschließlich im Bereich der Oberfläche erreicht.

Die US 2006/0228642 A1 betrifft ein Verfahren zur Herstellung von Polymerlatexpartikeln mit Kern/Hülle-Struktur mit einem inneren Wachskern und einer äußeren Latexhülle, wobei derartige Partikel insbesondere für Tonerzusammensetzungen verwendbar sein sollen.

Wachshaltige Kompositpartikel zur Verbesserung der mechanischen Eigenschaften von Beschichtungssystemen, insbesondere zur Erhöhung der Verschleißbeständigkeit, sind im Stand der Technik bislang noch nicht vorgeschlagen worden.

Darüber hinaus betrifft die WO 2008/079760 A2 Nanokompositpigmente sowie Verfahren zur Behandlung und Verbesserung des ästhetischen Eindrucks von biologischen Oberflächen, indem die optischen Eigenschaften der Oberflächen verändert werden.

Die DE 10 2006 025 848 A1 betrifft ein Verfahren zur Herstellung von teilchenförmigen Kompositmaterialien. Hierbei werden zunächst trockene und feste anorganisch oder organisch-basierte Teilchenagglomerate oder - aggregate in der Gasphase bzw. in einem gasförmigen Trägermedium und in Gegenwart organisch-basierter Matrixpartikel unter Energieeintrag zerkleinert und nachfolgend die resultierenden zerkleinerten Teilchen in die organischbasierten Matrixpartikel dispergiert, insbesondere hierin eingelagert und/oder hieran angelagert.

Weiterhin betrifft die WO 2007/146390 A2 eine Nanokompositzusammensetzung, welche mindestens ein thermoplastisches Polyamid und unmodifizierte Tonnanopartikel nach Art eines Sepiolits aufweist.

Die WO 2007/095292 A2 betrifft Polymerkomposite und Polymemanokomposite mit oberflächenmodifizierten Füllstoffen, deren Oberflächenenergie der des Polymers entspricht. Die oberflächenmodifizierten Füllstoffe besitzen eine Fließspannung und eine Viskosität von etwa 30.000 Pa·s.

Die US 2005/0196605 A1 betrifft eine durch Strahlung härtbare Feststoffzusammensetzung, welche eine Mischung aus mindestens einem Oligomer, mindestens einem Monomer, mindestens einem Fotoinitiator und mindestens einem Nanofüllstoff aufweist.

Weiterhin betrifft die WO 01/09231 A1 eine ausgehärtete BeschichtungsZusammensetzung, welche eine Vielzahl von Partikeln aufweist, wobei die Konzentration der Partikel an der Grenzfläche der Zusammensetzung höher ist als im Inneren der Zusammensetzung.

Die EP 1 477 457 A1 betrifft oberflächenmodifizierte Fällungskieselsäuren, deren Oberfläche durch Behandlung mit einem Polymeren dahingehend modifiziert wird, dass sie besonders gut für den Einsatz als Mattierungsmittel geeignet sind.

Schließlich betrifft die WO 95/31508 A1 ein Mattierungsmittel auf Basis einer mit Wachs überzogenen Kieselsäure. Die mit Wachs überzogene Kieselsäure wird durch Vermahlen des Wachses mit einer amorphen, hochporösen Kieselsäure hergestellt.

Der vorliegenden Erfindung liegt daher die Aufgabe zugrunde, Füllstoffpartikel der vorgenannten Art bzw. diese Füllstoffpartikel enthaltende disperse Systeme, insbesondere Dispersionen, bereitzustellen, welche sich insbesondere zum Einsatz in den vorgenannten Systemen eignen und die mit den herkömmlichen Partikeln verbundenen Nachteile zumindest weitgehend vermeiden oder aber wenigstens abschwächen, sowie ein entsprechendes Herstellungsverfahren für derartige Partikel anzugeben.

Eine weitere Aufgabe der vorliegenden Erfindung ist darin zu sehen, neuartige Füllstoffpartikel der eingangs genannten Art bereitzustellen, welche bei ihrer Inkorporierung in die eingangs genannten Systeme eine effiziente Leistungssteigerung bewirken und sich insbesondere zur Verbesserung der mechanischen Eigenschaften von Beschichtungs- und Dispersionssystemen (so z. B. von Lacken, Farben wie Druckfarben, Beschichtungen etc.) und von Kunststoffen, insbesondere speziell zur Steigerung von deren Verschleißeigenschaften, insbesondere der Kratzfestigkeit und Abriebfestigkeit, eignen, insbesondere aber ohne dabei andere geforderte Anwendungseigenschaften dieser Systeme (wie z. B. Glanzverhalten, Oberflächenglätte, Adhäsion etc.) negativ zu beeinflussen.

Zur Lösung des zuvor geschilderten Problems schlägt die vorliegende Erfindung somit wachshaltige anorganisch-organische Kompositpartikel, insbesondere Kompositnanopartikel, nach Patentanspruch 1 vor; weitere, vorteilhafte Ausgestaltungen sind Gegenstand der betreffenden Unteransprüche.

Weiterer Gegenstand der vorliegenden Erfindung ist ein Verfahren zur Herstellung der erfindungsgemäßen Kompositpartikel, wie es in den Patentansprüchen 9 bis 11 wiedergegeben ist.

Wiederum ein weiterer Gegenstand der vorliegenden Erfindung ist die erfindungsgemäße Verwendung der Kompositpartikel nach der vorliegenden Erfindung, wie sie in den betreffenden Verwendungsansprüchen wiedergegeben ist (Patentansprüche 12 und 13).

Wiederum ein weiterer Gegenstand der vorliegenden Erfindung sind Dispersionen, welche die erfindungsgemäßen Kompositpartikel in einem Träger-oder Dispergemedium enthalten (Patentanspruch 14).

Schließlich sind ein weiterer Gegenstand der Erfindung Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen, welche die erfindungsgemäßen Kompositpartikel enthalten (Patentanspruch 15).

Es versteht sich von selbst, daß im nachfolgenden solche Ausführungen, welche nur zu einem einzelnen Aspekt der vorliegenden Erfindung gemacht sind, gleichermaßen entsprechend auch für die anderen Aspekte der vorliegenden Erfindung gelten, ohne daß dies einer ausdrücklichen Erwähnung bedarf.

Gegenstand der vorliegenden Erfindung - gemäß einem **ersten** Aspekt der vorliegenden Erfindung - sind somit anorganisch-organische Kompositpartikel in Form von Kompositnanopartikeln mit Teilchengrößen im Bereich von 1 bis 1.000 nm, wobei die Kompositpartikel mindestens ein organisch-basiertes Material, welches mindestens ein Wachs enthält oder hieraus besteht, und ein anorganisch-basiertes Material umfassen;
- wobei die Kompositpartikel das organisch-basierte Material einerseits und das anorganisch-basierte Material andererseits in innigem und stabilem Verbund enthalten und wobei das organisch-basierte Material auf dem anorganisch-basierten Material abgeschieden ist,
- wobei das gewichtsbezogene Verhältnis von organisch-basiertem Material zu anorganisch-basiertem Material in den Kompositpartikeln im Bereich von 1 : 50 bis 200 : 1 variiert;
- wobei das anorganisch-basierte Material der Kompositpartikel in Form von anorganischen Nanopartikeln mit Teilchengrößen der anorganischen Nanopartikel im Bereich von 0,5 bis 750 nm vorliegt;
- wobei das anorganisch-basierte Material der Kompositpartikel aus mindestens einem anorganischen Oxid, Hydroxid, Oxidhydroxid, Sulfat, Phosphat, Sulfid, Carbonat, Nitrid, Silikat, Carbid und/oder Metall oder aber aus Mischungen oder Kombinationen solcher Verbindungen gebildet ist oder diese Verbindung(en) enthält; und
- wobei das organisch-basierte Material der Kompositpartikel aus mindestens einem Wachs gebildet ist oder dieses enthält, insbesondere wobei das Wachs ausgewählt ist aus der Gruppe von (i) natürlichen Wachsen, insbesondere pflanzlichen, tierischen und Mineralwachsen; (ii) chemisch modifizierten Wachsen; (iii) synthetischen Wachsen; sowie deren Mischungen.

Eine Besonderheit der vorliegenden Erfindung ist zunächst darin zu sehen, daß anorganisch-organische Hybridpartikel bzw. Kompositpartikel aus einem wachsbasierten organischen Material einerseits und einem anorganischen Material bereitgestellt werden. Derartige Kompositpartikel sind bislang noch nicht bereitgestellt worden. Diese Partikel vereinen die positiven Eigenschaften der Wachse einerseits und des betreffenden anorganischen Materials, insbesondere von anorganischen Nanopartikeln, andererseits in einer einzigen Struktur bzw. in einem einzigen Partikel und führen bei ihrer Inkorporierung als Füllstoffpartikel in Beschichtungsstoffe und Beschichtungssysteme der vorgenannten Art zu einer signifikanten Verbesserung der mechanischen Eigenschaften, insbesondere zu einer Steigerung der Verschleißbeständigkeit, insbesondere der Kratzfestigkeit und/oder der Abriebfestigkeit, und dies bei wesentlichem Erhalt bzw. unter Umständen sogar Verbesserung der übrigen geforderten Anwendungseigenschaften (wie z. B. Oberflächenglätte, Glanz etc.). Zudem lassen sich die erfindungsgemäßen Kompositpartikel homogen und stabil in die vorgenannten Systeme einarbeiten. Ihre Inkorporierung in die vorgenannten Systeme, insbesondere in Beschichtungsstoffe und Beschichtungssysteme, wie Lacke, Farben und dergleichen, führt insbesondere zu keinerlei Eintrübung der betreffenden Systeme.

Was die erfindungsgemäßen Kompositpartikel anbelangt, so weisen diese Kompositpartikel Teilchengrößen von 1 bis 1.000 nm, vorzugsweise 2 bis 750 nm, weiter bevorzugt 5 bis 600 nm, besonders bevorzugt 10 bis 500 nm, auf. Die Bestimmung der Teilchengröße kann beispielsweise mittels Transmissionselektronenmikroskopie, analytischer Ultrazentrifugation oder Methoden der Lichtstreuung erfolgen.

Das anorganisch-basierte Material der Kompositpartikel liegt erfindungsgemäß in Form von anorganischen Nanopartikeln mit Teilchengrößen der anorganischen Nanopartikel im Bereich von 0,5 bis 750 nm, insbesondere 1 bis 500 nm, vorzugsweise 2 bis 250 nm, weiter bevorzugt 5 bis 150 nm, besonders bevorzugt 10 bis 100 nm, vor, wobei die Bestimmung der Teilchengröße beispielsweise mittels Transmissionselektronenmikroskopie, analytischer Ultrazentrifugation oder Methoden der Lichtstreuung erfolgen kann. Auf diesen anorganischen Partikeln ist das Wachs enthaltende bzw. hieraus bestehende organische Material abgeschieden.

Es versteht sich von selbst, daß bei allen im Rahmen der vorliegenden Erfindung angegebenen Größen- und Bereichsangaben es einzelfallbedingt oder anwendungsbezogen erforderlich sein kann, hiervon abzuweichen, ohne daß der Rahmen der vorliegenden Erfindung verlassen ist.

Erfindungsgemäß enthalten die Kompositpartikel das organisch-basierte Material einerseits und das anorganisch-basierte Material andererseits in innigem und stabilem Verbund. Im Rahmen der vorliegenden Erfindung ist das organisch-basierte Material auf dem anorganisch-basierten Material abgeschieden (z. B. durch Fällung), wie nachfolgend noch im Detail beschrieben.

Was die jeweiligen Anteile an anorganischem Material einerseits und organischem Material andererseits in den erfindungsgemäßen Kompositpartikeln anbelangt, so können diese Anteile in weiten Bereichen variieren: Erfindungsgemäß variiert das gewichtsbezogene Verhältnis von organisch-basiertem Material, insbesondere Wachs, zu anorganisch-basiertem Material in den Kompositpartikeln im Bereich von 1 : 50 bis 200 : 1, insbesondere 1 : 20 bis 100 : 1, vorzugsweise 1 : 1 bis 50 : 1.

Was das anorganisch-basierte Material der erfindungsgemäßen Kompositpartikel anbelangt, so ist dieses aus mindestens einem anorganischen Oxid (z. B. TiO₂, ZnO, Al₂O₃, SiO₂, CeO₂, Fe₂O₃, Fe₃O₄ etc.), Hydroxid (z. B. Al[OH]₃ etc.), Oxidhydroxid (z. B. AlOOH etc.), Sulfat (z. B. Erdalkalisulfate, wie Bariumsulfat, Calciumsulfat etc.), Phosphat (z. B. Erdalkaliphosphat, wie Calciumphosphat, oder Lanthanphosphat etc.), Sulfid (z. B. Cadmiumsulfid, Zinksulfid etc.), Carbonat (z. B. Erdalkalicarbonat, wie Magnesiumcarbonat oder Calciumcarbonat etc.), Nitrid (z. B. AlN, Si₃N₄ etc.), Silikat (z. B. Erdalkalisilikat, wie Calciumsilikat etc, Schicht- und Phyllosilikaten etc.), Carbid (z. B. SiC etc.), einwandigen oder mehrwandigen Carbonanotubes und/oder Metall/Element (z. B. Silber, Kupfer, Fulleren) oder aber aus Mischungen oder Kombinationen solcher Verbindungen gebildet oder enthält diese Verbindung(en).

Vorteilhafterweise ist das vorgenannte das anorganisch-basierte Material aus der Gruppe von anorganischen Oxiden, Hydroxiden, Oxidhydroxiden, Sulfaten, Phosphaten, Sulfiden, Carbonaten, Nitriden, Silikaten, Carbiden und/oder Metallen/Elementen in dem betreffenden Medium schwerlöslich ausgebildet.

Insbesondere kann das anorganisch-basierte Material aus mindestens einem Oxid, Hydroxid, Oxidhydroxid, Sulfat, Phosphat, Sulfid, Carbonat, Nitrid, Silikat, Carbid mindestens eines Metalls oder Halbmetalls oder aber aus Metallen oder aber aus Mischungen oder Kombinationen solcher Verbindungen gebildet sein oder diese Verbindung(en) enthalten.

Vorzugsweise kann das anorganisch-basierte Material der erfindungsgemäßen Kompositpartikel aus mindestens einem Oxid, Hydroxid und/oder Oxidhydroxid des Aluminiums, Siliziums, Zinks, Titans, Cers und/oder Eisens, einem Erdalkalisulfat, einem Erdalkali- oder Lanthanphosphat, einem Cadmium-oder Zinksulfid, einem Erdalkalicarbonat, einem Aluminium- oder Siliziumnitrid, einem Erdalkalisilkat, einem Siliciumcarbid, Kohlenstoffnanoröhren oder Silber oder aber aus Mischungen oder Kombinationen solcher Verbindungen gebildet sein oder diese Verbindung(en) enthalten.

Besonders bevorzugt für die Ausbildung des anorganisch-basierten Materials der erfindungsgemäßen Kompositpartikel sind die folgenden Verbindungen: TiO₂, ZnO, Al₂O₃, SiO₂, CeO₂, Fe₂O₃, Fe₃O₄, Al(OH)₃, Al(O)OH, Erdalkalisulfate (z. B. Bariumsulfat, Calciumsulfat etc.), Erdalkaliphosphate (z. B. Calciumphosphat), Lanthanphosphat, Cadmiumsulfid, Zinksulfid, Erdalkalicarbonat (z. B. Magnesiumcarbonat, Calciumcarbonat etc.), AlN, Si₃N₄, Erdalkalisilikate (z. B. Calciumsilikat etc.), SiC und/oder Silber sowie Mischungen oder Kombinationen solcher Verbindungen.

Ganz besonders bevorzugt ist es, wenn das anorganisch-basierte Material aus Aluminiumoxid, Siliziumdioxid, Zinkoxid und/oder Titandioxid gebildet ist oder diese Verbindung(en) enthält.

Noch weiter bevorzugt ist es, wenn das anorganisch-basierte Material der erfindungsgemäßen Kompositpartikel aus Siliziumdioxid (z. B. in Form von insbesondere hochdispersem SiO₂ bzw. Polykieselsäuren) oder Aluminiumoxid gebildet ist.

Was das organisch-basierte Material der erfindungsgemäßen Kompositpartikel anbelangt, so ist dieses organisch-basierte Material aus mindestens einem Wachs gebildet bzw. enthält ein solches Wachs. Dabei kann das Wachs insbesondere ausgewählt sein aus der Gruppe von (i) natürlichen Wachsen, insbesondere pflanzlichen, tierischen und Mineralwachsen; (ii) chemisch modifizierten Wachsen; (iii) synthetischen Wachsen; sowie deren Mischungen.

Gemäß einer besonders bevorzugten Ausführungsform der vorliegenden Erfindung wird als organisch-basiertes Material der erfindungsgemäßen Kompositpartikel ein synthetisches Wachs, insbesondere ein polyolefinbasiertes Wachs, vorzugsweise ein Wachs auf Basis eines oxidierten Polyolefins, eingesetzt.

Was den Begriff des Wachses anbelangt, so handelt es sich hierbei um eine phänomenologische Bezeichnung für eine Reihe natürlich oder künstlich bzw. synthetisch gewonnener Stoffe, welche in der Regel folgende Eigenschaften aufweisen: Wachse sind bei 20 °C knetbar, fest bis brüchig-hart, grob bis feinkristallin, durchscheinend bis opak, jedoch nicht glasartig, über 40 °C ohne Zersetzung schmelzend, jedoch schon wenig oberhalb des Schmelzpunktes verhältnismäßig niedrigviskos und im allgemeinen bzw. vorteilhafterweise nicht fadenziehend, weisen eine stark temperaturabhängige Konsistenz und Löslichkeit auf und sind unter leichtem Druck polierbar. Ist mehr als eine der zuvor aufgeführten Eigenschaften nicht erfüllt, ist dieser Stoff nach der DGF (Deutsche Gesellschaft für Fettwissenschaften) kein Wachs (vgl. DGF-Einheitsmethode M-I 1 (75)).

Wachse unterscheiden sich von ähnlichen synthetischen oder natürlichen Produkten (z. B. Harzen, plastischen Massen, Metallseifen etc.) hauptsächlich darin, daß sie im allgemeinen etwa zwischen 50 und 90 °C, in Ausnahmefällen auch bis etwa 200 °C, in den schmelzflüssigen, niedrigviskosen Zustand übergehen und praktisch frei von aschebildenden Verbindungen sind. Wachse bilden Pasten oder Gele und brennen in der Regel mit rußender Flamme.

Nach ihrer Herkunft unterteilt man die Wachse in drei Gruppen ein, nämlich (i) natürliche Wachse, hierunter pflanzliche Wachse (z. B. Candelillawachs, Carnaubawachs, Japanwachs, Espartograswachs, Korkwachs, Guarumawachs, Reiskeimölwachs, Zuckerrohrwachs, Ouricurywachs, Montanwachs etc.), tierische Wachse (z. B. Bienenwachs, Schellackwachs, Walrat, Lanolin bzw. Wollwachs, Bürzelfett etc.) und Mineralwachse (z. B. Ceresin, Ozokerit bzw. Erdwachs etc.); (ii) chemisch modifizierte Wachse, hierunter Hartwachse (z. B. Montanesterwachse, Sasolwachse, hydrierte Jojobawachse etc.); sowie (iii) synthetische Wachse, hierunter Polyalkylenwachse, Polyalkylenglykolwachse (z. B. Polyethylenglykolwachse) etc.

Hauptbestandteil natürlicher rezenter ("nachwachsender") Wachse sind Ester langkettiger Fettsäuren (Wachssäuren) mit langkettigen Fettalkoholen, Triterpen- oder Steroidalkoholen; diese Wachsester enthalten auch freie Carboxyl-und/oder Hydroxylgruppen, welche das Emulgiervermögen der sogenannten Wachsseifen bewirken. Natürliche fossile Wachse, z. B. aus Braunkohle oder Erdöl, bestehen - ebenso wie Wachse aus der Fischer-Tropsch-Synthese oder Polyalkylenwachse (z. B. Polyethylenwachse) - hauptsächlich aus geradkettigen Kohlenwasserstoffen; erstere können aber je nach Provenienz auch verzweigte oder cycloaliphatische Kohlenwasserstoffe enthalten. Häufig werden diese "Kohlenwasserstoff"-Wachse durch nachträgliche Oxidation oder im Fall der Polyolefinwachse auch durch Comonomere mit Carboxylgruppen funktionalisiert.

Zu weitergehenden Einzelheiten zum Begriff der Wachse kann beispielsweise verwiesen werden auf Römpp Chemielexikon, 10. Auflage, Band 6, 1999, Georg Thieme Verlag Stuttgart/New York, Seite 4906, Stichwort: "Wachse" sowie die dort referierte Literatur, insbesondere Cosm. Toil. 101, 49 (1986) sowie DGF-Einheitsmethoden, Abteilung M-Wachse und Wachsprodukte, 7. Ergänzungslieferung 05/1999, Stuttgart: Wissenschaftliche Verlagsgesellschaft, wobei die vorgenannten Literaturstellen hiermit durch Bezugnahme vollinhaltlich in die vorliegende Anmeldung eingeschlossen sind. Erfindungsgemäß bevorzugt ist es, wenn als organisch-basiertes Material ein Wachs eingesetzt wird, welches funktionelle Gruppen, die mit dem anorganisch-basierten Material in Wechselwirkung zu treten, insbesondere hiermit physikalische und/oder chemische Bindungen auszubilden, imstande sind, enthält.

Vorzugsweise handelt es sich bei den funktionellen Gruppen um polare Gruppen, insbesondere Gruppen, welche Heteroatome aus der Gruppe von O, N und/oder S, bevorzugt O, enthalten, vorzugsweise Hydroxylgruppen, Polyethergruppen, insbesondere Polyalkylenoxidgruppen, und/oder Carboxylgruppen, besonders bevorzugt Polyethergruppen und/oder Hydroxylgruppen. Die funktionellen Gruppen dieser Wachse bewirken bzw. steigern die Affinität des Wachsmaterials in bezug auf das anorganische Material und ermöglichen auf diese Weise eine verbesserte bzw. stabilere Adhäsion.

Gemäß einer besonderen Ausführungsform kann es vorgesehen sein, daß das anorganisch-basierte Material der erfindungsgemäßen anorganisch-organischen Kompositpartikel oberflächenmodifiziert ausgebildet ist, wobei eine derartige Oberflächenmodifizierung vorteilhafterweise mittels Polysiloxangruppen, insbesondere mittels gegebenenfalls organisch modifizierten Polysiloxangruppen, erfolgt, d. h. an bzw. auf der Oberfläche des anorganisch-basierten Materials der erfindungsgemäßen Kompositpartikel sind bei dieser Ausführungsform Polysiloxangruppen aufgebracht, vorzugsweise mittels physikalischer und/oder chemischer, insbesondere chemischer kovalenter Bindung.

Die entsprechende Oberflächenmodifizierung mittels Polysiloxangruppen, insbesondere mittels gegebenenfalls organisch modifizierten Polysiloxangruppen, bewirkt eine noch weitergehende Steigerung bzw. Verbesserung der Anwendungseigenschaften der erfindungsgemäßen Kompositpartikel, insbesondere wenn sie als Füllstoffe in Beschichtungsstoffe und Beschichtungssysteme eingearbeitet werden. Insbesondere führt die Oberflächenmodifizierung, vorzugsweise mit Polysiloxangruppen, zu einer verringerten Sedimentations-und Gelbildungsneigung von Dispersionen, welche die erfindungsgemäßen Kompositpartikel erhalten. Auch wird einer Versprödung des abgetrockneten bzw. ausgehärteten Beschichtungssystems effizient entgegengewirkt. Die Oberflächenmodifizierung hat weiterhin den Vorteil, daß bei Einarbeitung der erfindungsgemäßen Kompositpartikel als Füllstoffteilchen in Dispersionssysteme die Wechselwirkung mit dem Bindemittel vorteilhaft beeinflußt wird und auf diese Weise Transparenz und Brechungsindex gegenüber nicht oberflächenmodifizierten Partikeln noch weiter verbessert werden, insbesondere infolge des verringerten Brechungsindexunterschiedes eine deutlich geringere Lichtstreuung eintritt.

Die Oberflächenmodifizierung, insbesondere mittels Polysiloxangruppen, vorzugsweise mittels gegebenenfalls organisch modifizierten Polysiloxangruppen, ist dem Fachmann grundsätzlich aus dem Stand der Technik bekannt. Diesbezüglich kann auf die auf die Anmelderin selbst zurückgehenden Patentanmeldungen DE 10 2005 006 870 A1 bzw. EP 1 690 902 A2 und DE 10 2007 030 285 A1 bzw. PCT/EP 2007/006273 verwiesen werden, deren gesamter Offenbarungsgehalt hiermit durch Bezugnahme eingeschlossen ist. Alle vorgenannten Druckschriften betreffen die Oberflächenmodifizierung von metall- oder halbmetalloxidischen oder hydroxidischen Oberflächen mittels Polysiloxanen, vorteilhafterweise durch Ausbildung chemischer, insbesondere kovalenter Bindungen.

Weiterer Gegenstand der vorliegenden Erfindung - gemäß einem **zweiten** Aspekt der vorliegenden Erfindung - ist ein Verfahren zur Herstellung von anorganisch-organischen Kompositnanopartikeln, wie zuvor beschrieben, wobei mindestens ein organisch-basiertes Material, welches mindestens ein Wachs enthält oder hieraus besteht, und ein anorganisch-basiertes Material gemeinsam aus einem sie enthaltenden Medium ausgefällt werden und/oder wobei mindestens ein organisch-basiertes Material, welches mindestens ein Wachs enthält oder hieraus besteht, auf einem anorganisch-basierten Material abgeschieden wird, so daß Kompositpartikel aus organisch-basiertem Material, welches mindestens ein Wachs enthält oder hieraus besteht, und anorganisch-basiertem Material resultieren;
- wobei die Ausgangsmaterialien in einem gewichtsbezogenen Verhältnis von organisch-basiertem Material, insbesondere Wachs, zu anorganisch-basiertem Material im Bereich von 1 : 50 bis 200 : 1 eingesetzt werden;
- wobei das anorganisch-basierte Material in Form von anorganischen Nanopartikeln, insbesondere mit Teilchengrößen der anorganischen Nanopartikel im Bereich von 0,5 bis 750 nm eingesetzt wird;
- wobei als anorganisch-basiertes Material mindestens ein anorganisches Oxid, Hydroxid, Oxidhydroxid, Sulfat, Phosphat, Sulfid, Carbonat, Nitrid, Silikat, Carbid und/oder Metall/Element oder aber Mischungen oder Kombinationen solcher Verbindungen eingesetzt wird bzw. werden; und
- wobei als organisch-basiertes Material ein Wachs aus der Gruppe von (i) natürlichen Wachsen, insbesondere pflanzlichen, tierischen und Mineralwachsen; (ii) chemisch modifizierten Wachsen; (iii) synthetischen Wachsen; sowie deren Mischungen eingesetzt wird.

Die erfindungsgemäßen Kompositpartikel sind insbesondere durch gemeinsame Fällung ("Co-Fällung") von organisch-basiertem und anorganisch-basiertem Material erhältlich bzw. durch Abscheidung organisch-basiertem Material auf anorganisch-basiertem Material, insbesondere von Wachs auf anorganische Nanopartikeln, erhältlich.

Was das erfindungsgemäße Verfahren zur Herstellung der anorganisch-organischen Kompositpartikel nach der vorliegenden Erfindung anbelangt, so wird erfindungsgemäß also derart vorgegangen, daß mindestens ein mindestens ein Wachs enthaltendes oder hieraus bestehendes organisch-basiertes Material und ein anorganisch-basiertes Material gemeinsam aus einem sie enthaltenden Medium ausgefällt werden und/oder daß mindestens ein mindestens ein Wachs enthaltendes oder hieraus bestehendes organisch-basiertes Material auf einem anorganisch-basierten Material abgeschieden wird oder innig mit diesem vermischt wird.

Dem Medium, in dem das erfindungsgemäße Verfahren durchgeführt wird, können neben den vorgenannten Ausgangsmaterialien (d. h. wachshaltiges organisch-basiertes Material einerseits und anorganisch-basiertes Material andererseits) gegebenenfalls weitere Inhaltsstoffe und/oder Additive zugesetzt werden, welche insbesondere ausgewählt sein können aus der Gruppe von Emulgatoren (z. B. ionische, wie anionische oder kationische, oder aber nichtionische Emulgatoren etc.), Netzmitteln, Antioxidationsmitteln, Stabilisatoren, Neutralisationsmitteln (z. B. Hydroxide, Amine etc.), Katalysatoren, Verdickungsmitteln, Dispergiermitteln, Bioziden oder dergleichen sowie Mischungen dieser Verbindungen.

Im Rahmen des erfindungsgemäßen Verfahrens wird derart vorgegangen, daß nach der Fällung erfindungsgemäße Kompositpartikel mit Partikelgrößen im Bereich von 1 bis 1.000 nm, vorzugsweise 2 bis 750 nm, weiter bevorzugt 5 bis 600 nm, besonders bevorzugt 10 bis 500 nm, resultieren.

Das anorganisch-basierte Material wird in Form von anorganischen Nanopartikeln mit Teilchengrößen der anorganischen Nanopartikel im Bereich von 0,5 bis 750 nm, insbesondere 1 bis 500 nm, vorzugsweise 2 bis 250 nm, weiter bevorzugt 5 bis 150 nm, besonders bevorzugt 10 bis 100 nm, eingesetzt. Hierauf wird dann das organische Material, insbesondere ein Wachs, aufgebracht bzw. abgeschieden.

Erfindungsgemäß wird derart vorgegangen, daß die Ausgangsmaterialien in einem gewichtsbezogenen Verhältnis von organisch-basiertem Material, insbesondere Wachs, zu anorganisch-basiertem Material im Bereich von 1 : 50 bis 200 : 1, insbesondere 1 : 20 bis 100 : 1, vorzugsweise 1 : 1 bis 50 : 1, eingesetzt werden.

Gemäß einer ersten Variante des erfindungsgemäßen Verfahrens kann derart vorgegangen werden, daß zunächst eine vorzugsweise wäßrige Emulsion von Wachsteilchen in Gegenwart von in dieser Emulsion dispergierten anorganischen Nanopartikeln, wie zuvor definiert, hergestellt wird, was insbesondere unter Erwärmung auf Temperaturen oberhalb der Schmelztemperatur der Wachsteilchen erfolgen kann, und nachfolgend die Emulsion abgekühlt wird, insbesondere unterhalb von Temperaturen der Schmelztemperatur der Wachsteilchen, so daß das Wachs auf den anorganischen Partikeln unter Ausbildung der erfindungsgemäßen anorganisch-organischen Kompositpartikel abgeschieden oder mit diesen innig vermischt wird. Die Abkühlung kann beispielsweise unter Eintrag weiteren, abgekühlten Mediums (z. B. Wasser, gegebenenfalls zusammen mit weiteren Additiven) erfolgen.

Gemäß einer zweiten Variante des erfindungsgemäßen Verfahrens kann alternativ zunächst eine Lösung mindestens eines Wachses in Gegenwart von in dieser Lösung dispergierten anorganischen Nanopartikeln, wie zuvor definiert, hergestellt werden und nachfolgend ein Fällungsmittel in die Wachslösung mit den hierin dispergierten anorganischen Partikeln eingetragen werden, so daß das Wachs ausgefällt und auf den anorganischen Partikeln unter Ausbildung der erfindungsgemäßen anorganischen-organischen Kompositpartikel abgeschieden oder mit diesen innig vermischt wird.

Gemäß wiederum einer weiteren, dritten Variante des erfindungsgemäßen Verfahrens kann - wiederum alternativ - derart vorgegangen werden, daß zunächst eine Lösung mindestens eines Wachses hergestellt wird und nachfolgend eine Dispersion von anorganischen Nanopartikeln in einem Fällungsmittel für das Wachs eingetragen wird, so daß hierdurch das Wachs ausgefällt und auf den anorganischen Partikeln unter Ausbildung der erfindungsgemäßen anorganischen-organischen Kompositpartikel abgeschieden oder mit diesen innig vermischt wird.

Aus den vorgenannten Gründen ist es erfindungsgemäß besonders bevorzugt, wenn das eingesetzte anorganisch-basierte Material einer Oberflächenmodifizierung unterzogen wird, insbesondere durch Aufbringung von Polysiloxangruppen. Für weitergehende diesbezügliche Einzelheiten kann auf die vorstehenden Ausführungen verwiesen werden.

Bezüglich des eingesetzten anorganischen Materials kann zur Vermeidung unnötiger Wiederholungen auf die vorstehenden Ausführungen zu den erfindungsgemäßen Kompositpartikeln verwiesen werden, welche in bezug auf das erfindungsgemäße Verfahren in gleicher Weise gelten.

Was das eingesetzte Wachs anbelangt, so kann diesbezüglich zur Vermeidung unnötiger Wiederholungen auf die vorstehenden Ausführungen zu den erfindungsgemäßen Kompositpartikeln verwiesen werden, welche in bezug auf das erfindungsgemäße Herstellungsverfahren entsprechend gelten.

Im Rahmen der vorliegenden Erfindung können insbesondere mikronisierte Wachse verwendet werden, welche dann in erfindungsgemäßer Weise mit dem anorganischen Material zur Herstellung der erfindungsgemäßen Kompositpartikel verbunden werden, insbesondere hierauf abgeschieden werden.

Weiterer Gegenstand der vorliegenden Erfindung - gemäß einem **dritten** Aspekt der vorliegenden Erfindung - ist die Verwendung der erfindungsgemäßen Kompositpartikel als Füllstoffe. Insbesondere lassen sich die erfindungsgemäßen Kompositpartikel in Beschichtungsstoffen und Beschichtungssystemen, insbesondere Lacken, Farben und dergleichen, in Dispersionen aller Art, in Kunststoffen, in Schaumstoffen, in Kosmetika, insbesondere Nagellacken, in Klebstoffen sowie in Dichtungsmassen einsetzen, insbesondere dort in ihrer Eigenschaft als Füllstoffe bzw. Inhaltsstoffe bzw. Additive.

Insbesondere können die erfindungsgemäßen Kompositpartikel dazu eingesetzt werden, zur Verbesserung der mechanischen Eigenschaften, insbesondere zur Steigerung der Verschleißbeständigkeit, vorzugsweise der Kratzfestigkeit und/oder Abriebfestigkeit, in den vorgenannten Systemen beizutragen.

Weiterer Gegenstand der vorliegenden Erfindung - gemäß einem **vierten** Aspekt der vorliegenden Erfindung - sind Dispersionen, welche die erfindungsgemäßen Kompositpartikel in einem Träger- oder Dispergiermedium enthalten.

Schließlich sind weiterer Gegenstand der vorliegenden Erfindung - gemäß einem **fünften** Aspekt der vorliegenden Erfindung - Beschichtungsstoffe und Beschichtungssysteme, insbesondere Lacke, Farben und dergleichen, Kunststoffe, Schaumstoffe, Kosmetika, insbesondere Nagellacke, Klebstoffe und Dichtungsmassen, welche die erfindungsgemäßen Kompositpartikel enthalten.

Mit den erfindungsgemäßen Kompositpartikeln sind erstmals organischanorganisch-basierte Hybridpartikel bzw. Kompositpartikel bereitgestellt worden, welche bei ihrer Inkorporierung in die vorgenannten Systeme zu einer deutlichen Leistungssteigerung, insbesondere zu einer signifikanten Verbesserung der mechanischen Eigenschaften, insbesondere der Verschleißbeständigkeit, vorzugsweise der Kratzfestigkeit und/oder Abriebfestigkeit, führen.

Durch die vorliegende Erfindung ist es erstmals gelungen, die Anwendungsvorteile anorganisch-basierter Nanopartikel einerseits und wachshaltiger Partikel andererseits in einem einzigen Kompositmaterial zu vereinen. Insbesondere bewirken die erfindungsgemäßen Kompositpartikel bei ihrer Inkorporierung in die vorgenannten Systeme (d. h. Beschichtungsstoffe und Beschichtungssysteme, insbesondere Lacke, Farben oder dergleichen, Kunststoffe, Schaumstoffe, Kosmetika, insbesondere Nagellacke, Klebstoffe und Dichtungsmassen) eine effiziente Leistungssteigerung und eignen sich insbesondere zur Verbesserung von deren mechanischen Eigenschaften, insbesondere von Verschleißeigenschaften, wie Kratzfestigkeit und Abriebfestigkeit, insbesondere aber ohne daß dabei andere geforderte Anwendungseigenschaften dieser Systeme negativ beeinflußt werden (z. B. Glanzverhalten, Oberflächenglätte, Adhäsionsvermögen etc.).

Auf diese Weise wird ein wirksamer Füllstoff für die vorgenannten Systeme bereitgestellt, welcher beispielsweise bei Inkorporierung in Beschichtungssysteme (z. B. Lacke und Farben) die mechanischen Eigenschaften der Beschichtung, wie z. B. Abrieb- und Kratzfestigkeit, ohne negative Beeinflussung des Glanzes verbessert. Nach dem Stand der Technik dagegen führen zwar beispielsweise wachshaltige Dispersionen oder mikronisierte Wachse zu einer Verbesserung der mechanischen Eigenschaften, insbesondere der Abriebfestigkeit, haben aber den Nachteil eines unerwünschten Mattierungseffektes.

Durch die Bereitstellung der erfindungsgemäßen Kompositpartikel gelingt es zudem, anorganisch-basierte Nanopartikel stabil in einer Wachsemulsion bzw. Wachsdispersion zu dispergieren. Dagegen sind nach dem gegenwärtigen Stand der Technik anorganische Nanopartikeldispersionen üblicherweise inkompatibel mit wachsbasierten Formulierungen und daher nach dem gegenwärtigen Stand der Technik zumindest in dieser Form nicht zugänglich. Durch Einbringung der anorganischen Nanopartikel in die erfindungsgemäßen Kompositmaterialien werden die anorganischen Nanopartikel auch im Zustand der Dispersion in effizienter Weise stabilisiert. Nach dem Stand der Technik dagegen ist aufgrund des großen Dichteunterschiedes zwischen anorganischen Nanopartikeln einerseits und Wachsen andererseits die Herstellung eines stabilen Produktes nicht bzw. nur unter großem Aufwand möglich. Dispersionen der erfindungsgemäßen Kompositpartikel dagegen sind über längere Zeit stabil und neigen zu einem gegenüber den reinen anorganischen Nanopartikeln deutlich verringertem Sedimentationsverhalten, d. h. die anorganischen Nanopartikel im Rahmen der erfindungsgemäßen Kompositpartikel bleiben stabil, insbesondere sedimentationsstabil, dispergiert.

Wie zuvor beschrieben, führen die erfindungsgemäßen Kompositpartikel - im Vergleich jeweils zu reinen Wachsemulsionen oder zu reinen anorganischen Nanopartikeldispersionen oder aber zu deren Mischungen - zu verbesserten mechanischen Eigenschaften von Beschichtungen und beeinträchtigen - im Vergleich zu rein wachsbasierten Systemen - das Glanzverhalten der resultierenden Beschichtungen nicht wesentlich.

Im Vergleich zu den einzelnen Bestandteilen, d. h. Wachs einerseits und anorganische Nanopartikel andererseits oder deren rein physikalischen Mischungen, zeigen die erfindungsgemäßen Kompositmaterialien einen synergistischen Wirkeffekt, insbesondere in bezug auf die mechanischen Eigenschaften der Beschichtungen, so daß die Menge an erfindungsgemäßen Kompositpartikeln im Vergleich zu den reinen Materialien, insbesondere im Vergleich zu reinen anorganischen Nanopartikeldispersionen, deutlich reduziert werden kann.

Im Vergleich zu mineralischen Füllstoffpartikeln des Standes der Technik, welche aus dem mineralischen Material in Masse bestehen, weisen die erfindungsgemäßen Kompositpartikel zudem deutlich geringere Dichten bzw. Eigengewichte auf. Dies führt dazu, daß zur Erzielung vergleichbarer Eigenschaften bzw. Effekte deutlich geringere Gewichtsmengen an den erfindungsgemäßen Kompositpartikeln im Vergleich zu reinen mineralischen Füllstoffpartikeln eingesetzt werden müssen, da die mechanischen Eigenschaften der betreffenden Systeme durch den Volumenanteil der Füllstoffpartikel bestimmt werden. Dies führt neben einer erheblichen Kostenersparnis auch zu leistungsstärkeren Dispersionen, welche in ihrer Handhabung infolge des verringerten Füllstoffgehalts verbessert sind.

Zudem haben rein anorganische Füllstoffpartikel des Standes der Technik den Nachteil, daß sie hohe Brechungsindizes im Vergleich zu einem reinen Bindemittel aufweisen, so daß ihre Inkorporierung in die betreffenden Bindemittel zu einer Eintrübung bzw. Glanzreduktion führen. Dieses Phänomen wird bei den erfindungsgemäßen Kompositpartikeln nicht beobachtet, d. h. ihre Inkorporierung in die betreffenden Bindemittelsysteme führt zu keiner signifikanten Eintrübung, da im Vergleich zu herkömmlichen mineralischen Füllstoffpartikeln aus den vorgenannten Gründen deutlich geringere Mengen an den erfindungsgemäßen Kompositpartikeln benötigt werden.

Auch lassen sich die erfindungsgemäßen Füllstoffpartikel ohne weiteres in die betreffenden Systeme stabil, insbesondere langzeitstabil und phasenstabil, einarbeiten, ohne daß es zu einer signifikanten Entmischung oder aber etwa Anreicherung an der Oberfläche kommt. Hierdurch wird die Leistungssteigerung homogen über das gesamte System erreicht.

Die erfindungsgemäßen Kompositpartikel und die erfindungsgemäßen Dispersionen sind ausgesprochen breit anwendbar. Die breite Anwendbarkeit in Kombination mit der außerordentlich guten Effizienz der erfindungsgemäßen Kompositpartikel und der erfindungsgemäßen Dispersionen übertreffen Partikel und Dispersionen des Standes der Technik bei weitem.

Die Anwendung der erfindungsgemäßen Kompositpartikel und Dispersionen kann beispielsweise durch Zugabe in bestehende Systeme, welche z. B. zu Lacken, Klebestoffen, Kunststoffen etc. weiterverarbeitet werden, erfolgen. Durch die Zugabe bereits kleiner Mengen der erfindungsgemäßen Kompositpartikel bzw. der erfindungsgemäßen Dispersionen wird eine außerordentlich erhöhte mechanische Beständigkeit erzielt. Überraschenderweise werden die übrigen Verarbeitungseigenschaften der betreffenden Systeme, insbesondere Lacke, Kunststoffe etc., nicht bzw. nicht signifikant beeinflußt, so daß keine neue Optimierung der übrigen Parameter bei diesen Anwendungen zu erfolgen hat.

Die erfindungsgemäßen Kompositpartikel und ihre Dispersionen eignen sich daher in hervorragender Weise für den Einsatz in Beschichtungsmaterialien aller Art, Kunststoffen, Klebstoffen, Dichtungsmassen etc.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Beispiel 1: Herstellung organisch-anorganischer Wachs/Al₂O₃-Komposit-partikel und deren Anwendung

303 g oxidiertes HDPE-Wachs wurde zusammen mit 80 g einer Al₂O₃-Dispersion (50%ig in Wasser) mit einer Partikelgröße von etwa 40 nm und 70 g anionischem Emulgator, 34 g Diethylethanolamin (Neutralisationsmittel), 4 g Natriumsulfit (Antioxidationsmittel) und 315 g Wasser gemischt und auf eine Temperatur von 145 °C erhitzt. Die ganze Mischung wurde 15 min lang bei dieser Temperatur gehalten.

Erfindungsgemäß geeignete im Rahmen der Versuche eingesetzte Wachse besitzen typischerweise Schmelzpunkte im Bereich von 125 bis 140 °C und Säurezahlen im Bereich von 10 bis 40 KOH/g. Beispielsweise kann eine HDPE-Wachsemulsion vom Typ AQUACER^{®} 513 von der BYK-Chemie GmbH, Deutschland, eingesetzt werden.

Nachfolgend wurden 175 g Wasser und 19 g Diethylethanolamin auf 80 °C erhitzt und in die zuvor beschriebene Mischung injiziert. Anschließend wurde die ganze Mischung auf eine Temperatur von 40 °C abgekühlt.

Es resultierte eine Emulsion von Wachs/Al₂O₃-Kompositnanopartikeln. Infolge der Ausbildung der partikulären Kompositstruktur wurde das Sedimentationsverhalten der anorganischen Nanopartikel signifikant verbessert, was sich in der nahezu ausbleibenden bzw. deutlich reduzierten Sedimentation von Partikeln zeigt, worin eine beträchtliche Verbesserung gegenüber der ursprünglichen Al₂O₃-Nanopartikeldispersion besteht, einhergehend mit einer verbesserten Handhabbarkeit.

Das auf diese Weise erhaltene Wachs/Al₂O₃-Kompositnanopartikelsystem wurde nachfolgend in ein Zweikomponenten-PU-Beschichtungssystem inkorporiert (Menge an Wachs/Al₂O₃-Kompositnanopartikeln, berechnet als Al₂O₃ und bezogen auf die Beschichtungsmasse: 4 Gew.-%) und anschließend auf seine Anwendungseigenschaften in bezug auf die Beschichtung, insbesondere Glanz, Kratzfestigkeit und Gleitfähigkeit, getestet. Gegenüber einer reinen Wachsemulsion oder aber einer reinen Nanopartikeldispersion zeigen die erfindungsgemäßen Kompositpartikel eine verbesserte Kratz- und Abriebfestigkeit ohne Einschränkung im Glanzverhalten der resultierenden Beschichtungen gegenüber reinen Wachsdispersionen. Auch die Oberflächenglätte wird nicht negativ beeinflußt. Die Ergebnisse sind in der nachstehenden Tabelle zusammengefaßt.

### Beispiel 2: Herstellung organisch-anorganischer Wachs/Al₂O₃-Komposit-partikel und deren Anwendung

Beispiel 1 wurde wiederholt, jedoch mit der Abweichung, daß das Wachs in Xylol gelöst wurde und nach Zugabe der Al₂O₃-Dispersion und der übrigen Inhaltsstoffe Butylacetat als Fällungsmittel hinzugegeben wurde in solchen Mengen, daß Wachs/Al₂O₃-Kompositnanopatikel ausgefällt bzw. erhalten wurden. Die nachfolgenden Verfahrensschritte entfallen dementsprechend.

Auch das auf diese Weise erhaltene Wachs/Al₂O₃-Kompositnanopartikelsystem wurde den vorgenannten Anwendungstests unterzogen, und die Ergeb-nisse sind in der nachstehenden Tabelle zusammengefaßt.

### Beispiel 3: Herstellung organisch-anorganischer Wachs/Al₂O₃-Komposit-partikel und deren Anwendung

Beispiel 2 wurde hier wiederholt, jedoch mit der Abweichung, daß die Zugabe des Fällungsmittels für das Wachs im Rahmen der Zugabe der Al₂O₃-Dispersion erfolgte, indem eine butylacetatbasierte Al₂O₃-Dispersion eingesetzt wurde.

Auch das auf diese Weise erhaltene Wachs/Al₂O₃-Kompositnanopartikelsystem wurde den vorgenannten Anwendungstests unterzogen, und die Ergebnisse sind in der nachstehenden Tabelle zusammengefaßt.

### Beispiele 4 bis 6: Herstellung organisch-anorganischer Wachs/SiO₂-Kompositpartikel und deren Anwendung

Die vorangehenden Beispiele 1 bis 3 wurden wiederholt, jedoch mit der Abweichung, daß anstelle der Al₂O₃-Nanopartikel SiO₂-Partikel mit Teilchengrößen von etwa 40 nm eingesetzt wurden.

Auch die auf diese Weise erhaltenen Wachs/SiO₂-Kompositnanopartikelsy steme wurden den vorgenannten Anwendungstests unterzogen, und die Ergebnisse sind in der nachstehenden Tabelle zusammengefaßt.

### Anwendungstests:

Mit Ausnahme der Kontrollprobe und der mit dem reinen Wachs beschichteten Proben enthalten alle übrigen Proben in der Beschichtungsmasse (Trokkengewicht) die zuvor beschriebenen Füllstoffpartikel in Mengen von 4 Gew.-%, bezogen auf die eingesetzte Beschichtungsmasse bzw. Beschichtungsdispersion und berechnet als anorganische Nanopartikel (d. h. Aluminiumoxid- bzw. Siliziumdioxidpartikel).

Die Kratzfestigkeit wurde nach der sogenannten Satra-Testmethode nach 500, 1.000, 2.000 bzw. 4.000 Zyklen bestimmt, wobei die Bewertung der resultierenden Abriebfestigkeit nach Schulnotensystem mit Bewertungsnoten von 1 bis 5 erfolgte (1 = sehr gut bis 5 = ungenügend). Hierzu wurden jeweils die Beschichtungen in gleicher Schichtstärke aufgetragen und unter gleichen Bedingungen 24 Stunden austrocknen und aushärten gelassen. Nachfolgend wird nach weiterer 3tägiger Lagerung der Kratzfestigkeitstest nach Satra unter für den Fachmann an sich bekannten Bedingungen mittels einer auf der Oberfläche der Beschichtungen rotierenden Abriebscheibe mit den vorgenannten Zyklen durchgeführt.

Die Bestimmung des Glanzwertes erfolgte nach DIN EN 67530 entsprechend ISO 2813 unter einem Winkel von 60°.

Die Messung der Oberflächenglätte ("Slip") erfolgte durch Messung der Gleiteigenschaften über die prozentuale Reduzierung des Gleitwiderstandes. Bei dieser Meßmethode wird die Reibungskraft eines definierten Gegenstandes auf der Beschichtungsoberfläche gemessen; hierbei wird ein 500 g Gewichtsstein mit einer definierten Filzunterlage von einer Zugmaschine über die Lackoberfläche mit konstanter Geschwindigkeit geschoben. Die dazu benötigte Kraft wird mit einem elektronischen Kraftaufnehmer gemessen. Gegenüber einer Kontrollprobe wird aus den Kraftwerten die Reduzierung der benötigten Kraft in % im Vergleich zur Kontrollprobe berechnet. Bei positiven Werten ist die Probe glatter als die Kontrolle, und bei negativen Werten ist die Probe stumpfer als die Kontrolle. Gewünscht sind im vorliegenden Fall möglichst niedrige Werte.

Die Abriebfestigkeit wurde nach der Taber-Abrasion-Methode gemäß ASTM D 4060 (Angabe des Gewichtsverlusts) unter einer Last von 500 g bestimmt. Angegeben ist Massenverlust in mg.

Nachfolgend ist die Tabelle mit den Testergebnissen wiedergegeben.

| **Beschichtungsmasse** | **Kratzfestigkeit (Satra)** | | | | **Glanz (60°)** | **Oberflächenglätte ("Slip")** | **Abriebfestigkeit nach Taber (mg)** |
|---|---|---|---|---|---|---|---|
| | **500 Zyklen** | **1.000 Zyklen** | **2.000 Zyklen** | **4.000 Zyklen** | | | |
| Kontrolle | 5 | 5 | 5 | 5 | 87,1 | - | - |
| Reine Al₂O₃-Dispersion (0 = 40 nm) (Vergleich) | 1-2 | 2 | 4-5 | 5 | 84,5 | -14,3 % | 12,3 |
| Reine Wachsemulsion (Vergleich) | 2-3 | 5 | 5 | 5 | 79,0 | +4,29 % | 7,2 |
| Bsp. 1 | 1 | 1-2 | 1-2 | 2-3 | 86,9 | -14,5 % | 4,3 |
| Bsp. 2 | 1 | 1-2 | 2 | 3 | 87,0 | -17,1 % | 3,8 |
| Bsp. 3 | 1-2 | 1-2 | 1-2 | 3 | 87,0 | -28,6 % | 4,5 |
| Bsp. 4 | 1 | 1-2 | 2 | 2-3 | 86,7 | -22,5 % | 4,0 |
| Bsp. 5 | 1 | 1-2 | 2 | 3 | 86,8 | -19,8 % | 4,5 |
| Bsp. 6 | 1-2 | 2 | 2-3 | 3-4 | 86,2 | -14,4 % | 5,1 |

Die vorstehenden Ergebnisse zeigen, daß durch die Inkorporierung der erfindungsgemäßen Partikel die Abriebs- und Verkratzungsbeständigkeit signifikant verbessert werden kann. Zudem führt die Inkorporierung der erfindungsgemäßen Partikel in den vorgenannten Mengen zu keinerlei nennenswerten Beeinträchtigung der übrigen Anwendungseigenschaften.

Die vorstehenden Versuche belegen in eindrucksvoller Weise die gesteigerte Leistungsfähigkeit der erfindungsgemäßen Systeme bzw. Partikel.

## Patentansprüche

1. Anorganisch-organische Kompositpartikel in Form von Kompositnanopartikeln mit Teilchengrößen im Bereich von 1 bis 1.000 nm, wobei die Kompositpartikel mindestens ein organisch-basiertes Material, welches mindestens ein Wachs enthält oder hieraus besteht, und ein anorganisch-basiertes Material umfassen;
- wobei die Kompositpartikel das organisch-basierte Material einerseits und das anorganisch-basierte Material andererseits in innigem und stabilem Verbund enthalten und wobei das organisch-basierte Material auf dem anorganisch-basierten Material abgeschieden ist,
- wobei das gewichtsbezogene Verhältnis von organisch-basiertem Material zu anorganisch-basiertem Material in den Kompositpartikeln im Bereich von 1 : 50 bis 200 : 1 variiert;
- wobei das anorganisch-basierte Material der Kompositpartikel in Form von anorganischen Nanopartikeln mit Teilchengrößen der anorganischen Nanopartikel im Bereich von 0,5 bis 750 nm vorliegt;
- wobei das anorganisch-basierte Material der Kompositpartikel aus mindestens einem anorganischen Oxid, Hydroxid, Oxidhydroxid, Sulfat, Phosphat, Sulfid, Carbonat, Nitrid, Silikat, Carbid und/oder Metall oder aber aus Mischungen oder Kombinationen solcher Verbindungen gebildet ist oder diese Verbindung(en) enthält; und
- wobei das organisch-basierte Material der Kompositpartikel aus mindestens einem Wachs gebildet ist oder dieses enthält, insbesondere wobei das Wachs ausgewählt ist aus der Gruppe von (i) natürlichen Wachsen, insbesondere pflanzlichen, tierischen und Mineralwachsen; (ii) chemisch modifizierten Wachsen; (iii) synthetischen Wachsen; sowie deren Mischungen.

2. Kompositpartikel nach Anspruch 1, **dadurch gekennzeichnet, daß** die Kompositpartikel Teilchengrößen im Bereich von 2 bis 750 nm, weiter bevorzugt 5 bis 600 nm, besonders bevorzugt 10 bis 500 nm, aufweisen und/oder daß das anorganisch-basierte Material der Kompositpartikel in Form von anorganischen Nanopartikel insbesondere mit Teilchengrößen der anorganischen Nanopartikel im Bereich von 1 bis 500 nm, vorzugsweise 2 bis 250 nm, weiter bevorzugt 5 bis 150 nm, besonders bevorzugt 10 bis 100 nm, vorliegt.

3. Kompositpartikel nach einem der vorangehenden Ansprüche, **dadurch gekennzeichnet, daß** das gewichtsbezogene Verhältnis von organisch-basiertem Material, insbesondere Wachs, zu anorganisch-basiertem Material in den Kompositpartikeln im Bereich von 1 : 20 bis 100 : 1, vorzugsweise 1 : 1 bis 50 : 1, variiert.

4. Kompositpartikel nach einem der vorangehenden Ansprüche, **dadurch gekennzeichnet, daß** das anorganisch-basierte Material der Kompositpartikel aus mindestens einem Oxid, Hydroxid, Oxidhydroxid, Sulfat, Phosphat, Sulfid, Carbonat, Nitrid, Silikat und/oder Carbid mindestens eines Metalls oder Halbmetalls oder aber aus einem Metall/Element oder aber aus Mischungen oder Kombinationen solcher Verbindungen gebildet ist oder diese Verbindung(en) enthält, und/oder daß das anorganisch-basierte Material der Kompositpartikel aus mindestens einem Oxid, Hydroxid und/oder Oxidhydroxid des Aluminiums, Siliziums, Zinks, Titans, Cers und/oder Eisens, einem Erdalkalisulfat, einem Erdalkali- oder Lanthanphosphat, einem Cadmium- oder Zinksulfid, einem Erdalkalicarbonat, einem Aluminium- oder Siliziumnitrid, einem Erdalkalisilkat, einem Siliciumcarbid, Kohlenstoffnanoröhren oder Silber oder aber aus Mischungen oder Kombinationen solcher Verbindungen gebildet ist oder diese Verbindung(en) enthält.

5. Kompositpartikel nach einem der vorangehenden Ansprüche, **dadurch gekennzeichnet, daß** das anorganisch-basierte Material der Kompositpartikel aus Aluminiumoxid, Siliziumdioxid, Zinkoxid und/oder Titandioxid gebildet ist oder diese Verbindung(en) enthält.

6. Kompositpartikel nach einem der vorangehenden Ansprüche, **dadurch gekennzeichnet, daß** das organisch-basierte Material der Kompositpartikel, insbesondere das Wachs, funktionelle Gruppen, welche mit dem anorganisch-basierten Material in Wechselwirkung zu treten, insbesondere hiermit physikalische und/oder chemische Bindungen auszubilden, imstande sind, enthält, insbesondere wobei die funktionellen Gruppen polare Gruppen sind, insbesondere Gruppen, welche Heteroatome aus der Gruppe von O N und/oder S, bevorzugt O, enthalten, vorzugsweise Hydroxylgruppen, Polyethergruppen, insbesondere Polyalkylenoxidgruppen, und/oder Carboxylgruppen, besonders bevorzugt Polyethergruppen und/oder Hydroxylgruppen.

7. Kompositpartikel nach einem der vorangehenden Ansprüche, **dadurch gekennzeichnet, daß** das anorganisch-basierte Material der Kompositpartikel oberflächenmodifiziert ist, insbesondere mittels Polysiloxangruppen.

8. Kompositpartikel nach einem der vorangehenden Ansprüche, erhältlich durch gemeinsame Fällung ("Co-Fällung") von organisch-basiertem und anorganisch-basiertem Material und/oder erhältlich durch Abscheiden von organisch-basiertem Material auf anorganisch-basiertem Materials, insbesondere von Wachs auf anorganischen Partikel, vorzugsweise auf anorganischen Nanopartikel.

9. Verfahren zur Herstellung von anorganisch-organischen Kompositnanopartikeln nach den vorangehenden Ansprüchen, **dadurch gekennzeichnet, daß** mindestens ein organisch-basiertes Material, welches mindestens ein Wachs enthält oder hieraus besteht, und ein anorganisch-basiertes Material gemeinsam aus einem sie enthaltenden Medium ausgefällt werden und/oder daß mindestens ein organisch-basiertes Material, welches mindestens ein Wachs enthält oder hieraus besteht, auf einem anorganisch-basierten Material abgeschieden wird, so daß Kompositpartikel aus organisch-basiertem Material, welches mindestens ein Wachs enthält oder hieraus besteht, und anorganisch-basiertem Material resultieren;
- wobei die Ausgangsmaterialien in einem gewichtsbezogenen Verhältnis von organisch-basiertem Material, insbesondere Wachs, zu anorganisch-basiertem Material im Bereich von 1 : 50 bis 200 : 1 eingesetzt werden;
- wobei das anorganisch-basierte Material in Form von anorganischen Nanopartikeln, insbesondere mit Teilchengrößen der anorganischen Nanopartikel im Bereich von 0,5 bis 750 nm eingesetzt wird;
- wobei als anorganisch-basiertes Material mindestens ein anorganisches Oxid, Hydroxid, Oxidhydroxid, Sulfat, Phosphat, Sulfid, Carbonat, Nitrid, Silikat, Carbid und/oder Metall/Element oder aber Mischungen oder Kombinationen solcher Verbindungen eingesetzt wird bzw. werden; und
- wobei als organisch-basiertes Material ein Wachs aus der Gruppe von (i) natürlichen Wachsen, insbesondere pflanzlichen, tierischen und Mineralwachsen; (ii) chemisch modifizierten Wachsen; (iii) synthetischen Wachsen; sowie deren Mischungen eingesetzt wird.

10. Verfahren nach einem der vorangehenden Ansprüche, **dadurch gekennzeichnet, daß** als organisch-basiertes Material ein Wachs eingesetzt wird, welches funktionelle Gruppen, die mit dem anorganisch-basierten Material in Wechselwirkung zu treten, insbesondere hiermit physikalische und/oder chemische Bindungen auszubilden, imstande sind, enthält und/oder daß als organisch-basiertes Material ein Wachs eingesetzt wird, welches polare Gruppen, insbesondere Heteroatome aus der Gruppe von O, N und/oder S, bevorzugt O, enthaltende Gruppen, enthält und/oder daß als organisch-basiertes Material ein Hydroxylgruppen, Polyethergruppen, insbesondere Polyalkylenoxidgruppen, und/oder Carboxylgruppen, besonders bevorzugt Polyethergruppen und/oder Hydroxylgruppen enthaltendes Wachs, besonders bevorzugt ein polyethergruppen- und/oder hydroxylgruppenfunktionalisiertes Wachs, eingesetzt wird.

11. Verfahren nach einem der vorangehenden Ansprüche, **dadurch gekennzeichnet, daß** zunächst eine Emulsion von Wachsteilchen in Gegenwart von in dieser Emulsion dispergierten anorganischen Partikeln, insbesondere anorganischen Nanopartikeln, hergestellt wird, insbesondere unter Erwärmung auf Temperaturen oberhalb der Schmelztemperatur der Wachsteilchen, und nachfolgend die Emulsion abgekühlt wird, insbesondere unterhalb von Temperaturen der Schmelztemperatur der Wachsteilchen, so daß das Wachs auf den anorganischen Partikeln unter Ausbildung von anorganisch-organischen Kompositpartikeln abgeschieden wird, oder aber daß zunächst eine Lösung mindestens eines Wachses in Gegenwart von in dieser Lösung dispergierten anorganischen Partikeln, insbesondere anorganischen Nanopartikeln, hergestellt wird und nachfolgend ein Fällungsmittel in die Wachslösung eingetragen wird, so daß das Wachs auf den anorganischen Partikeln unter Ausbildung von anorganisch-organischen Kompositpartikeln abgeschieden wird, oder aber daß zunächst eine Lösung mindestens eines Wachses hergestellt wird und nachfolgend eine Dispersion von anorganischen Partikeln, insbesondere anorganischen Nanopartikeln, in einem Fällungsmittel für das Wachs eingetragen wird, so daß das Wachs auf den anorganischen Partikeln unter Ausbildung von anorganisch-organischen Kompositpartikeln abgeschieden wird.

12. Verwendung von Kompositpartikeln nach den vorangehenden Ansprüchen als Füllstoffe.

13. Verwendung von Kompositpartikeln nach den vorangehenden Ansprüchen in Beschichtungsstoffen und Beschichtungssystemen, insbesondere Lacken und Farben, in Dispersionen aller Art, in Kunststoffen, in Schaumstoffen, in Kosmetika, insbesondere Nagellacken, in Klebstoffen und in Dichtungsmassen, insbesondere als Füllstoffe.

14. Dispersionen, enthaltend Kompositpartikel nach den vorangehenden Ansprüchen in einem Träger- oder Dispergiermedium, insbesondere in Mengen, bezogen auf die Dispersionen, im Bereich von 0,01 bis 50 Gew.-%, vorzugsweise 0,1 bis 30 Gew.-%, bevorzugt 0,2 bis 20 Gew.-%, besonders bevorzugt 0,5 bis 10 Gew.-%.

15. Beschichtungsstoffe und Beschichtungssysteme, insbesondere Lacke und Farben, Kunststoffe, Schaumstoffe, Kosmetika, insbesondere Nagellacke, Klebstoffe und Dichtungsmassen, enthaltend Kompositpartikel nach den vorangehende Ansprüchen.

## Claims

1. Inorganic-organic composite particles in the form of composite nanoparticles having particle sizes in the range from 1 to 1000 nm, the composite particles comprising at least one organic-based material, which comprises or consists of at least one wax, and an inorganic-based material;
- where the composite particles comprise the organic-based material on the one hand and the inorganic-based material on the other hand in an intimate and stable assembly and where the organic-based material is deposited on the inorganic-based material,
- where the weight-based ratio of organic-based material to inorganic-based material in the composite particles varies in the range from 1:50 to 200:1;
- where the inorganic-based material of the composite particles is present in the form of inorganic nanoparticles with particle sizes of the inorganic nanoparticles in the range from 0.5 to 750 nm;
- where the inorganic-based material of the composite particles is formed of at least one inorganic oxide, hydroxide, oxide hydroxide, sulfate, phosphate, sulfide, carbonate, nitride, silicate, carbide and/or metal or else of mixtures or combinations of such compounds, or comprises said compound(s); and
- where the organic-based material of the composite particles is formed of at least one wax or comprises said wax, in particular where the wax is selected from the group of (i) natural waxes, in particular plant, animal, and mineral waxes; (ii) chemically modified waxes; (iii) synthetic waxes; and also mixtures thereof.

2. Composite particles according to Claim 1, **characterized in that** the composite particles have particle sizes in the range from 2 to 750 nm, more preferably 5 to 600 nm, very preferably 10 to 500 nm, and/or **in that** the inorganic-based material of the composite particles is present in the form of inorganic nanoparticles, in particular with particle sizes of the inorganic nanoparticles in the range from 1 to 500 nm, preferably 2 to 250 nm, more preferably 5 to 150 nm, very preferably 10 to 100 nm.

3. Composite particles according to either of the preceding claims, **characterized in that** the weight-based ratio of organic-based material, in particular wax, to inorganic-based material in the composite particles varies in the range from 1:20 to 100:1, preferably 1:1 to 50:1.

4. Composite particles according to any of the preceding claims, **characterized in that** the inorganic-based material of the composite particles is formed of at least one oxide, hydroxide, oxide hydroxide, sulfate, phosphate, sulfide, carbonate, nitride, silicate and/or carbide of at least one metal or semimetal or else of a metal/element or else of mixtures or combinations of such compounds, or comprises said compound(s), and/or **in that** the inorganic-based material of the composite particles is formed of at least one oxide, hydroxide and/or oxide hydroxide of aluminum, of silicon, of zinc, of titanium, of cerium and/or of iron, an alkaline earth metal sulfate, an alkaline earth metal phosphate or lanthanum phosphate, a cadmium sulfide or zinc sulfide, an alkaline earth metal carbonate, an aluminum nitride or silicon nitride, an alkaline earth metal silicate, a silicon carbide, carbon nanotubes or silver, or else of mixtures or combinations of such compounds, or comprises said compound(s).

5. Composite particles according to any of the preceding claims, **characterized in that** the inorganic-based material of the composite particles is formed of aluminum oxide, silicon dioxide, zinc oxide and/or titanium dioxide, or comprises said compound(s).

6. Composite particles according to any of the preceding claims, **characterized in that** the organic-based material of the composite particles, in particular the wax, comprises functional groups which are capable of interacting with the inorganic-based material, in particular of forming physical and/or chemical bonds therewith, in particular where the functional groups are polar groups, in particular groups which contain heteroatoms from the group of O, N and/or S, preferably O, preferably hydroxyl groups, polyether groups, in particular polyalkylene oxide groups, and/or carboxyl groups, very preferably polyether groups and/or hydroxyl groups.

7. Composite particles according to any of the preceding claims, **characterized in that** the inorganic-based material of the composite particles is surface-modified, in particular by means of polysiloxane groups.

8. Composite particles according to any of the preceding claims, obtainable by joint precipitation ("co-precipitation") of organic-based and inorganic-based material and/or obtainable by deposition of organic-based material on inorganic-based material, in particular of wax on inorganic particles, preferably on inorganic nanoparticles.

9. Process for preparing inorganic-organic composite nanoparticles according to the preceding claims, **characterized in that** at least one organic-based material which comprises or consists of at least one wax, and an inorganic-based material, are precipitated jointly from a medium comprising them, and/or **in that** at least one organic-based material which comprises or consists of at least one wax is deposited on an inorganic-based material, resulting in composite particles of organic-based material which comprises or consists of at least one wax, and of inorganic-based material;
- where the starting materials are used in a weight-based ratio of organic-based material, in particular wax, to inorganic-based material in the range from 1:50 to 200:1;
- where the inorganic-based material is used in the form of inorganic nanoparticles, in particular with particle sizes of the inorganic nanoparticles in the range from 0.5 to 750 nm;
- where inorganic-based material used is at least one inorganic oxide, hydroxide, oxide hydroxide, sulfate, phosphate, sulfide, carbonate, nitride, silicate, carbide and/or metal/element or else mixtures or combinations of such compounds; and
- where organic-based material used is a wax from the group of (i) natural waxes, in particular plant, animal, and mineral waxes; (ii) chemically modified waxes; (iii) synthetic waxes; and also mixtures thereof.

10. Process according to any of the preceding claims, **characterized in that** organic-based material used is as wax which comprises functional groups which are capable of interacting with the inorganic-based material, in particular of forming physical and/or chemical bonds therewith, and/or **in that** organic-based material used is a wax which comprises polar groups, in particular groups containing heteroatoms from the group of O, N and/or S, preferably O, and/or **in that** organic-based material used is a wax comprising hydroxyl groups, polyether groups, in particular polyalkylene oxide groups, and/or carboxyl groups, very preferably polyether groups and/or hydroxyl groups, very preferably a polyether-group- and/or hydroxyl-group-functionalized wax.

11. Process according to any of the preceding claims, **characterized in that** first of all an emulsion of wax particles is prepared in the presence of inorganic particles dispersed in this emulsion, in particular inorganic nanoparticles, in particular with heating to temperatures above the melting temperature of the wax particles, and subsequently the emulsion is cooled, in particular to temperatures below the melting temperature of the wax particles, and so the wax is deposited on the inorganic particles with formation of inorganic-organic composite particles, or else **in that** first of all a solution of at least one wax is prepared in the presence of inorganic particles dispersed in this solution, in particular inorganic nanoparticles, and subsequently a precipitant is introduced into the wax solution, and so the wax is deposited on the inorganic particles with formation of inorganic-organic composite particles; or else **in that** first of all a solution of at least one wax is prepared and subsequently a dispersion of inorganic particles, in particular inorganic nanoparticles, is introduced in a precipitant for the wax, and so the wax is deposited on the inorganic particles with formation of inorganic-organic composite particles.

12. Use of composite particles according to the preceding claims as fillers.

13. Use of composite particles according to the preceding claims in coating materials and coating systems, in particular paints and inks, in dispersions of all kinds, in plastics, in foams, in cosmetics, in particular nail varnishes, in adhesives, and in sealants, in particular as fillers.

14. Dispersions comprising composite particles according to the preceding claims in a carrier medium or dispersion medium, in particular in amounts, based on the dispersions, in the range from 0.0 1 % to 50%, preferably 0.1 % to 30%, more preferably 0.2% to 20%, very preferably 0.5% to 10%, by weight.

15. Coating materials and coating systems, in particular paints and inks, plastics, foams, cosmetics, in particular nail varnishes, adhesives, and sealants, comprising composite particles according to the preceding claims.

## Revendications

1. Particules composites inorganiques-organiques sous forme de nanoparticules composites présentant une granulométrie dans la plage de 1 à 1000 nm, les particules composites comprenant au moins un matériau à base organique, qui contient au moins une cire ou qui est constitué par celle-ci, et un matériau à base inorganique;
- les particules composites contenant le matériau à base organique d'une part et le matériau à base inorganique d'autre part dans un assemblage intime et stable et le matériau à base organique étant déposé sur le matériau à base inorganique,
- le rapport pondéral du matériau à base organique au matériau à base inorganique dans les particules composites variant dans la plage de 1:50 à 200: 1;
- le matériau à base inorganique des particules composites se trouvant sous forme de nanoparticules inorganiques présentant une granulométrie des nanoparticules inorganiques dans la plage de 0,5 à 750 nm;
- le matériau à base inorganique des particules composites étant formé par au moins un oxyde, hydroxyde, oxyde-hydroxyde, sulfate, phosphate, sulfure, carbonate, nitrure, silicate, carbure et/ou métal inorganique ou encore par des mélanges ou combinaisons de ces composés ou contenant ce(s) composé(s); et
- le matériau à base organique des particules composites étant formé par au moins une cire ou contenant celle-ci, la cire étant en particulier choisie dans le groupe formé par (i) les cires naturelles, en particulier les cires végétales, animales et minérales; (ii) les cires chimiquement modifiées; (iii) les cires synthétiques; ainsi que leurs mélanges.

2. Particules composites selon la revendication 1, **caractérisées en ce que** les particules composites présentent une granulométrie dans la plage de 2 à 750 nm, plus préférablement de 5 à 600 nm, de manière particulièrement préférée de 10 à 500 nm et/ou **en ce que** le matériau à base inorganique des particules composites se trouve sous forme de nanoparticules inorganiques, présentant en particulier une granulométrie des nanoparticules inorganiques dans la plage de 1 à 500 nm, de préférence de 2 à 250 nm, plus préférablement de 5 à 150 nm, de manière particulièrement préférée de 10 à 100 nm.

3. Particules composites selon l'une quelconque des revendications précédentes, **caractérisées en ce que** le rapport pondéral du matériau à base organique, en particulier la cire, au matériau à base inorganique dans les particules composites varie dans la plage de 1:20 à 100:1, de préférence de 1:1 à 50:1.

4. Particules composites selon l'une quelconque des revendications précédentes, **caractérisées en ce que** le matériau à base inorganique des particules composites est formé par au moins un oxyde, hydroxyde, oxyde-hydroxyde, sulfate, phosphate, sulfure, carbonate, nitrure, silicate et/ou carbure d'au moins un métal ou semi-métal ou encore par un métal/élément ou encore par des mélanges ou combinaisons de ces composés ou contient ce(s) composé(s), et/ou **en ce que** le matériau à base inorganique des particules composites est formé par au moins un oxyde, hydroxyde et/ou oxyde-hydroxyde de l'aluminium, du silicium, du zinc, du titane, du cérium et/ou du fer, un sulfate de métal alcalino-terreux, un phosphate de métal alcalino-terreux ou de lanthane, un sulfure de cadmium ou de zinc, un carbonate de métal alcalino-terreux, un nitrure d'aluminium ou de silicium, un silicate de métal alcalino-terreux, un carbure de silicium, des nanotubes de carbone ou de l'argent ou encore par des mélanges ou des combinaisons de ces composés ou contient ce(s) composé(s).

5. Particules composites selon l'une quelconque des revendications précédentes, **caractérisées en ce que** le matériau à base inorganique des particules composites est formé par de l'oxyde d'aluminium, du dioxyde de silicium, de l'oxyde de zinc et/ou du dioxyde de titane ou contient ce(s) composé(s).

6. Particules composites selon l'une quelconque des revendications précédentes, **caractérisées en ce que** le matériau à base organique des particules composites, en particulier la cire, contient des groupes fonctionnels qui sont en mesure d'entrer en interaction avec le matériau à base inorganique, en particulier de former des liaisons physiques et/ou chimiques avec celui-ci, les groupes fonctionnels étant en particulier des groupes polaires, en particulier des groupes qui contiennent des hétéroatomes du groupe formé par O, N et/ou S, de préférence O, de préférence des groupes hydroxyle, polyéther, en particulier des groupes poly(oxyde d'alkylène), et/ou des groupes carboxyle, de manière particulièrement préférée des groupes polyéther et/ou hydroxyle.

7. Particules composites selon l'une quelconque des revendications précédentes, **caractérisées en ce que** le matériau à base inorganique des particules composites est modifié en surface, en particulier au moyen de groupes polysiloxane.

8. Particules composites selon l'une quelconque des revendications précédentes, pouvant être obtenues par une précipitation commune ("coprécipitation") de matériau à base organique et de matériau à base inorganique et/ou pouvant être obtenues par dépôt de matériau à base organique sur du matériau à base inorganique, en particulier de cire sur des particules inorganiques, de préférence sur des nanoparticules inorganiques.

9. Procédé pour la préparation de nanoparticules composites inorganiques-organiques selon les revendications précédentes, **caractérisé en ce qu'**au moins un matériau à base organique, qui contient au moins une cire ou qui est constitué par celle-ci, et un matériau à base inorganique sont précipités ensemble à partir d'un milieu qui les contient et/ou **en ce qu'**au moins un matériau à base organique, qui contient au moins une cire ou qui est constitué par celle-ci, est déposé sur un matériau à base inorganique, de manière telle qu'on obtient des particules composites en matériau à base organique, qui contient au moins une cire ou qui est constitué par celle-ci, et en matériau à base inorganique;
- les matériaux de départ étant utilisés dans un rapport pondéral du matériau à base organique, en particulier la cire, au matériau à base inorganique dans la plage de 1:50 à 200:1;
- le matériau à base inorganique étant utilisé sous forme de nanoparticules inorganiques, présentant en particulier une granulométrie des nanoparticules inorganiques dans la plage de 0,5 à 750 nm;
- en utilisant comme matériau à base inorganique au moins un oxyde, hydroxyde, oxyde-hydroxyde, sulfate, phosphate, sulfure, carbonate, nitrure, silicate, carbure et/ou métal/élément inorganique ou encore des mélanges ou combinaisons de ces composés; et
- en utilisant comme matériau à base organique une cire du groupe formé par (i) les cires naturelles, en particulier les cires végétales, animales et minérales; (ii) les cires chimiquement modifiées; (iii) les cires synthétiques; ainsi que leurs mélanges.

10. Procédé selon l'une quelconque des revendications précédentes, **caractérisé en ce qu'**on utilise comme matériau à base organique une cire qui contient des groupes fonctionnels qui sont en mesure d'entrer en interaction avec le matériau à base inorganique, en particulier de former des liaisons physiques et/ou chimiques avec celui-ci, et/ou **en ce qu'**on utilise comme matériau à base organique une cire qui contient des groupes polaires, en particulier des groupes qui contiennent des hétéroatomes du groupe formé par O, N et/ou S, de préférence O, et/ou **en ce qu'**on utilise comme matériau à base organique une cire contenant des groupes hydroxyle, polyéther, en particulier des groupes poly(oxyde d'alkylène), et/ou des groupes carboxyle, de manière particulièrement préférée des groupes polyéther et/ou hydroxyle, de manière particulièrement préférée une cire fonctionnalisée avec des groupes polyéther et/ou hydroxyle.

11. Procédé selon l'une quelconque des revendications précédentes, **caractérisé en ce qu'**on prépare d'abord une émulsion de particules de cire en présence de particules inorganiques dispersées dans cette émulsion, en particulier des nanoparticules inorganiques, en particulier en chauffant à des températures supérieures à la température de fusion des particules de cire, puis on refroidit l'émulsion, en particulier à des températures inférieures à la température de fusion des particules de cire, de manière telle que la cire est déposée sur les particules inorganiques en formant des particules composites inorganiques-organiques et encore **en ce qu'**on prépare d'abord une solution d'au moins une cire en présence de particules inorganiques dispersées dans cette solution, en particulier des nanoparticules inorganiques, puis on introduit un agent de précipitation dans la solution de cire, de manière telle que la cire est déposée sur les particules inorganiques en formant des particules composites inorganiques-organiques, ou encore **en ce qu'**on prépare d'abord une solution d'au moins une cire, puis on introduit une dispersion de particules inorganiques, en particulier de nanoparticules inorganiques, dans un agent de précipitation pour la cire, de manière telle que la cire est déposée sur les particules inorganiques avec formation de particules composites inorganiques-organiques.

12. Utilisation de particules composites selon les revendications précédentes comme charges.

13. Utilisation de particules composites selon les revendications précédentes dans des substances de revêtement et des systèmes de revêtement, en particulier des laques et des encres, dans des dispersions de tous types, dans des matériaux synthétiques, dans des mousses, dans des cosmétiques, en particulier des vernis à ongles, dans des adhésifs et dans des masses d'étanchéité, en particulier comme charges.

14. Dispersions, contenant des particules composites selon les revendications précédentes dans un milieu support ou de dispersion, en particulier en des quantités, par rapport aux dispersions, dans la plage de 0,01 à 50% en poids, de préférence de 0,1 à 30% en poids, de préférence de 0,2 à 20% en poids, de manière particulièrement préférée de 0,5 à 10% en poids.

15. Substances de revêtement et systèmes de revêtement, en particulier laques et encres, matériaux synthétiques, mousses, cosmétiques, en particulier vernis à ongles, adhésifs et masses d'étanchéité, contenant des particules composites selon les revendications précédentes.
